# FASCICULE DE BREVET EUROPEEN

(11) **EP 2 882 551 B1**
(45) Date de publication et mention de la délivrance du brevet: **24.05.2023**
(21) Numéro de dépôt: 13758936.2
(22) Date de dépôt: 05.08.2013
(51) Int. Cl.: B22F 3/105, F01D 11/12, F01D 5/20, C23C 30/00, C23C 28/00, B22F 7/08, F01D 5/28

(54) **REVETEMENT EN MATERIAU ABRADABLE A FAIBLE RUGOSITE DE SURFACE**
ABREIBBARE BESCHICHTUNG AUS EINEM MATERIAL VON GERINGER OBERFLÄCHENRAUHEIT
ABRADABLE COATING MADE OF A MATERIAL HAVING A LOW SURFACE ROUGHNESS

(30) Priorité: 07.08.2012 FR 1257657
(43) Date de publication de la demande: 17.06.2015
(73) Titulaire: Safran Aircraft Engines, 75015 Paris (FR)
(72) Inventeur: PODGORSKI, Michael, 77550 Moissy-Cramayel cedex (FR); LE BIEZ, Philippe Charles Alain, 77550 Moissy-Cramayel cedex (FR); MOLLIEX, Ludovic Edmond Camille, 77550 Moissy-Cramayel cedex (FR); SELEZNEFF, Serge, 77550 Moissy-Cramayel cedex (FR)
(74) Mandataire: Gevers & Orès
(86) Numéro de dépôt international: PCT/FR2013/051888
(87) Numéro de publication internationale: WO 2014/023906

(56) Documents cités:
- EP-A2- 1 484 427
- EP-A2- 2 067 872
- US-A- 5 024 884
- US-A1- 2008 273 985
- SELEZNEFF S ET AL: "Thermal cycling behavior of EBPVD TBC systems deposited on doped Pt-rich bond coatings made by Spark Plasma Sintering (SPS)", SURFACE AND COATINGS TECHNOLOGY, vol. 206, no. 7, 28 juin 2011 (2011-06-28) , pages 1558-1565, XP028126170, ISSN: 0257-8972, DOI: 10.1016/J.SURFCOAT.2011.06.011 [extrait le 2011-06-28]
- Bharat Bhushan: "Chapter 2 - Surface Roughness Analysis and Measurement Techniques" In: "Modern Tribology Handbook Volume One", 28 December 2000 (2000-12-28), CRC Press, XP055365111, ISBN: 978-0-8493-7787-7 pages 49-119, * figure 2.48 *

## Description

### Domaine technique

La présente invention concerne le domaine des turbomachines et porte sur un revêtement en matériau abradable formant élément de joint d'étanchéité entre des pièces de stator et de rotor de turbomachine. Elle vise plus particulièrement un revêtement de ce type à faible rugosité de surface.

### Art antérieur

Une turbomachine est une machine tournante dans laquelle peut s'opérer un transfert d'énergie entre un fluide et un système aubagé solidaire d'un rotor, par exemple un compresseur ou une turbine faisant partie d'un turbomoteur tel qu'un moteur à turbine à gaz. Un turbomoteur à turbine à gaz pour aéronef, tel qu'un turboréacteur multi-flux, comprend généralement dans le sens de l'écoulement des gaz c'est-à-dire d'amont en aval, une soufflante, un ou plusieurs étages de compresseurs, une chambre de combustion, un ou plusieurs étages de turbines et une tuyère d'échappement des gaz.

On prévoit des revêtements en matériau abradable - désigné ainsi car susceptible d'être usé par abrasion - sur la face interne de pièces de stator, carters par exemple, à l'intérieur ou en vis-à-vis desquelles évoluent des pièces tournantes, tels que les systèmes aubagés de rotors de compresseurs ou de turbines ou encore les lames formant des léchettes d'un joint à labyrinthe. Afin de réduire les fuites de gaz de part et d'autre du joint d'étanchéité formé par l'extrémité de la pièce tournante et le revêtement de la pièce de stator, un jeu aussi faible que possible est ménagé entre eux. Toutefois au cours d'un cycle de fonctionnement de la turbomachine ce jeu est susceptible d'être réduit, voire annulé. Pour éviter un endommagement des pièces en mouvement, on permet à l'élément statique du joint de se déformer ou de se laisser usiner par les extrémités desdites pièces tournantes, lors des phases de fonctionnement où se produisent des variations dimensionnelles entraînant une interaction des pièces entre elles avec contact. On minimise ainsi les effets néfastes de ce contact, tant au niveau de la structure desdites extrémités desdites pièces tournantes, qu'au niveau de ladite surface interne desdits éléments de stator.

Un matériau abradable doit présenter les propriétés ci-après : il doit bien évidemment présenter une bonne abradabilité ; il doit en outre résister aux températures des milieux dans lesquels il est destiné à intervenir (500 à 1200°C, par exemple à l'intérieur des carters de moteurs d'avions) ; il doit aussi résister à l'érosion par chocs répétés de particules abrasives (détachées lors des contacts évoqués ci-dessus) ; ses coûts de fabrication et de mise en place doivent être aussi réduits que possible.

Un matériau abradable connu est réalisé à partir d'un alliage de type MCrAlY, M étant choisi parmi Ni, Co, NiCo ou CoNi. Par exemple un mélange d'un alliage de base MCrAlY et d'un agent porogène (Polyester Aromatique) est connu sous la dénomination commerciale Metco 2043. Un tel matériau obtenu selon une technique de projection thermique de poudre sur un substrat conviendrait pour former un revêtement à l'intérieur d'un carter de compresseur ou turbine en vis-à-vis des aubes du rotor de celui-ci ; il résiste aussi à une température jusqu'à 1200°C à laquelle les pièces sont soumises en fonctionnement. Cependant pour ce matériau, après l'étape de pyrolyse nécessaire à la formation des pores par élimination de l'agent porogène, on obtient un état de surface relativement rugueux, avec par exemple Ra= 12 µm. Une telle rugosité de surface est défavorable du point de vue du rendement de la turbomachine car elle entraîne une diminution importante des performances aérodynamiques en raison de l'augmentation de la couche limite dans la veine de gaz. Dans le cas d'un moteur, la rugosité du matériau abradable a ainsi un impact sur la consommation spécifique de ce dernier.

L'art antérieur comprend également les documents EP1484427A2, US2008/273985A1, EP2067872A2 et US5024884A, ainsi que le document de SELEZNEFF S. ET AL : « Thermal cycling behavior of EBPVD TBC systems deposited on doped Pt-rich γ-γ' bond coatings made by Spark Plasma Sintering (SPS) ».

### Présentation de l'invention

L'invention a principalement pour objectif la réalisation d'un revêtement en matériau abradable dont l'état de surface n'a pas d'impact négatif sur le rendement de la turbomachine et incidemment sur la consommation spécifique du moteur.

L'invention a ainsi pour objectif la réalisation d'un revêtement en matériau abradable présentant une structure poreuse dont la surface a une rugosité inférieure à 6 µm (Ra<6µm).

L'invention a également pour objectif un revêtement en matériau abradable qui tient en température jusqu'à 1200°C. Cette température correspond à celle que le substrat supportant le revêtement est capable de supporter.

L'invention a aussi pour objectif un revêtement en matériau abradable ne lui conférant pas en outre un comportement abrasif ou fragile.

La demanderesse a déjà mis au point un revêtement en matériau abradable poreux présentant une couche additionnelle avec une surface lisse. Ce revêtement a fait l'objet du dépôt d'une demande de brevet FR 1157729. Le caractère lisse de cette couche additionnelle est obtenu par rectification d'une couche de faible épaisseur déposée sur le matériau abradable poreux. Cette couche est notamment appliquée par projection thermique.

La demanderesse a maintenant mis au point un nouveau revêtement en matériau abradable. L'invention porte sur une turbomachine telle que définie dans la revendication 1.

En particulier les grains de céramique sont liés par frittage partiel et la surface libre lisse de faible rugosité présente une rugosité inférieure à 6 µm (Ra<6µm). En utilisant un matériau de comblement à base de grains de faible granulométrie, tels que des grains de granulométrie 0,3 µm, on obtient un résultat satisfaisant aux objectifs de l'invention sans avoir à usiner le revêtement.

Le matériau de comblement des aspérités en surface comprend des matériaux suivants : alumine, zircone, zircone yttriée, mullite ou yttrine. On choisit de préférence des matériaux présentant des coefficients de dilatation thermique proches de ceux de l'abradable initial. De plus une faculté au frittage à basse température est nécessaire.

L'invention s'applique à un revêtement abradable dont la couche en matériau abradable est poreuse et comprend un alliage de composition MCrAlY avec M choisi parmi Ni, Co Nico ou CoNi, un oxyde de zirconium, un composé Ni-graphite

Conformément à l'invention, les grains de céramiques, formant le matériau de comblement, pénètrent dans le matériau abradable sur une profondeur comprise entre 50 et 1000 µm.

L'invention porte en outre sur une utilisation telle que définie dans la revendication 2.

L'invention porte également sur un procédé tel que défini dans la revendication 3.

La granulométrie de la poudre céramique, en particulier, est choisie de manière à ce qu'elle soit inférieure à la taille des porosités formant les aspérités du matériau abradable. En particulier lorsque les porosités sont produites par un traitement thermique, la poudre est appliquée après le traitement pour engendrer les pores.

Avantageusement, la poudre est appliquée sur le matériau abradable sous forme d'une barbotine comprenant une suspension de la poudre dans l'eau avec éventuellement un agent dispersant, tel que l'acide nitrique et éventuellement également un liant organique.

Le traitement thermique de frittage partiel est réalisé à une température inférieure à 1200°C. Le frittage est dit partiel parce que le matériau obtenu n'est pas un matériau dense. Aucune pression n'est exercée pendant le traitement thermique. En outre un matériau dense n'est pas réalisable via un traitement thermique court à ces températures sans exercer de pression. Il y seulement un phénomène de diffusion aux contacts entre les grains.

Le traitement thermique de liaison peut aussi être réalisé par application locale d'un faisceau laser de puissance appropriée ou de tout autre moyen permettant un chauffage local notamment sur une surface d'au plus 1000 µm en diamètre.

### Présentation des figures

D'autres caractéristiques et avantages apparaîtront à la lecture de la description détaillée d'un mode de réalisation non limitatif de l'invention, en référence aux dessins sur lesquels :
La figure 1 montre une vue photographique en coupe d'un revêtement de l'invention avec un premier grossissement ;
La figure 2 montre un détail de la vue de la figure 1 avec un plus fort grossissement.

### Description détaillée de l'invention

L'exemple qui suit concerne un compresseur radial à haute pression d'un moteur à turbine à gaz ; le couvercle du rouet, en acier tel que celui connu sous la désignation INCO 909, est recouvert sur sa face interne d'un revêtement abradable sur une épaisseur de 1 mm. Le revêtement a été réalisé par projection thermique d'un alliage CoNiCrAlY associé à un agent porogène tel qu'un polyester aromatique, commercialisé sous la dénomination METCO 2043. La réalisation du matériau abradable comprend une étape de pyrolyse de l'agent porogène au cours de laquelle les pores sont créés à l'intérieur du matériau.

En surface du matériau, les pores forment des aspérités qu'il s'agit de combler. Conformément à l'invention, on dépose une poudre d'un matériau céramique sur la surface du matériau abradable de manière à combler la porosité de surface.

Le matériau est ici l'alumine qui présente l'avantage d'être stable à la température de fonctionnement de la turbomachine, et d'être un oxyde, donc non sensible aux phénomènes d'oxydation.

La poudre d'alumine est apportée de préférence sous la forme d'une barbotine aqueuse, dont notamment les paramètres de viscosité et de taux de charge sont déterminés de manière à permettre de recouvrir le matériau de manière optimale et de contrôler la profondeur de pénétration, entre 50 et 1000 µm.

La granulométrie de la poudre est sélectionnée en fonction de la taille des pores à combler du matériau abradable. La granulométrie de la poudre est comprise entre 0,1 et 15 µm, elle est par exemple inférieure à 1 µm.

Une taille de grains de céramique inférieure à 1µm permet d'effectuer un traitement de liaison des grains à une température compatible avec celle que peut supporter le substrat du matériau abradable.

Si toutefois la température maximale acceptable par le substrat est inférieure à celle acceptable par le matériau abradable alors un refroidissement local du substrat est avantageusement mis en place, par exemple au moyen de spires de refroidissement.

Le protocole de lissage via le matériau céramique est le suivant :
Préparation d'une barbotine en mélangeant la poudre d'alumine à la granulométrie appropriée, exemple 0,3 µm avec de l'eau en présence d'un agent dispersant tel que l'acide nitrique et éventuellement d'un liant organique, tel que le PVA (alcool polyvinylique) ;
Dépôt de la barbotine en surface du matériau abradable ;
Enlèvement de l'excédent par raclage de la surface ;
   - Si la porosité est fermée alors seule la porosité de surface est comblée,
   - Si la porosité est ouverte, la profondeur d'infiltration est gouvernée par le nombre de passes ; on vise alors une profondeur de pénétration supérieure à la profondeur de touche maximale de manière à conserver une rugosité faible même en cas de touche.
Séchage à l'air libre ou en étuve ;

Traitement thermique à 600°C pendant 4 heures de manière à éliminer le PVA si nécessaire et lier les grains de céramiques entre eux. Le frittage partiel est réalisé de manière à lier les grains en une phase alumine microporeuse, à la fois ni trop fragile, pour ne pas perdre sa cohésion en fonctionnement de la turbomachine avant tout contact, ni trop résistante pour éviter un comportement non plus abradable mais abrasif.

La solution de l'invention a permis d'obtenir un revêtement avec une surface lisse de Ra<1µm. un gain de consommation spécifique a été estimé à 0,4% en relation avec une telle rugosité par rapport à une rugosité de 12µm de l'art antérieur.

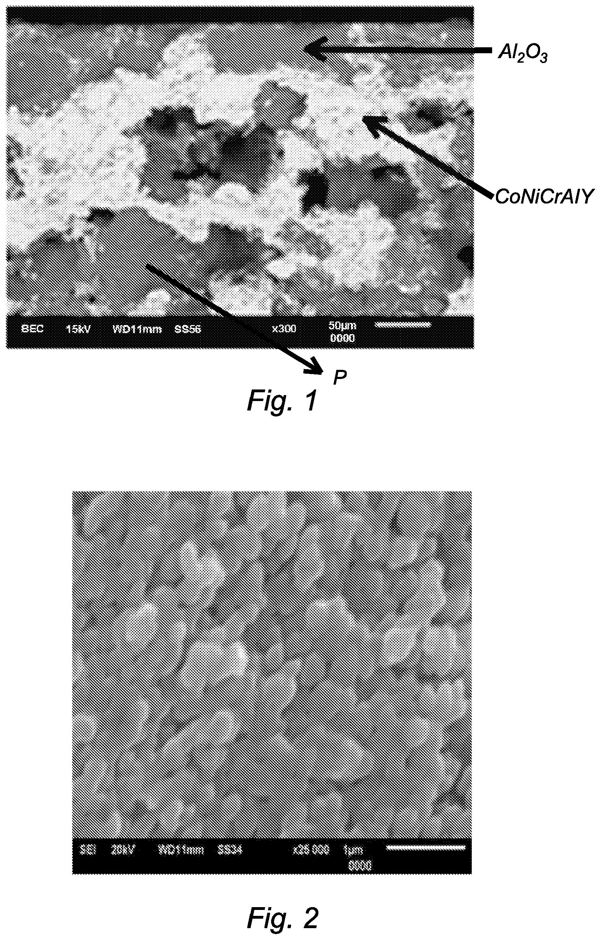

Sur les figures 1 et 2, représentant en coupe transversale le revêtement de l'invention, on distingue le matériau abradable CoNiCrAlY en clair avec les pores remplis P en foncé, et l'alumine A12O3 aussi visible en surface lissant les aspérités formées par les pores en surface. La figure 2 réalisée avec un plus fort grossissement par rapport à la figure 1 fait apparaître la cohésion entre les grains d'alumine.

L'alumine peut être remplacée par zircone, zircone yttriée, mullite ou yttrine dans la mesure où il peut se présenter sous la forme d'une poudre suffisamment réactive pour pouvoir réaliser un frittage partiel à des températures relativement basses, en fonction de la tenue du substrat en température.

Le matériau abradable cité dans l'exemple est le Metco 2043 ; l'invention ne se limite pas à celui-ci. On peut citer aussi NI graphite 75/25, Metco 2460, Metco 310 ou METCO314. On note que les matériaux Ni graphite 75/25, Metco 310 et Metco 314 ne contiennent pas de polyester à pyroliser pour obtenir des porosités. Les porosités viennent directement du procédé de dépôt de l'abradable.

## Revendications

1. Turbomachine, comprenant au moins une pièce de stator, à l'intérieur ou en vis-à-vis de laquelle évolue une pièce tournante, ladite au moins une pièce de stator comprenant une face interne munie d'un revêtement abradable formant élément de joint d'étanchéité entre la pièce de stator et la pièce tournante, le revêtement abradable comprenant une couche en matériau abradable dont les aspérités en surface sont comblées par des grains de céramique liés thermiquement, la couche en matériau abradable est poreuse et comprend un alliage de composition MCrAlY avec M choisi parmi Ni, Co, NiCo ou CoNi, un oxyde de zirconium, un composé Ni-graphite, la couche de surface comprenant au moins l'un des matériaux suivants : alumine, zircone, zircone yttriée, mullite ou yttrine, la céramique pénétrant dans le matériau abradable sur une profondeur comprise entre 50 et 1000 µm, la surface libre lisse de la couche en matériau abradable ayant une rugosité Ra inférieure à 6 µm plus particulièrement inférieure au micron.

2. Utilisation, en tant que revêtement abradable pour pièce de turbomachine, d'un revêtement comprenant une couche en matériau abradable dont les aspérités en surface sont comblées par des grains de céramique liés thermiquement, la couche en matériau abradable étant poreuse et comprenant un alliage de composition MCrAlY avec M choisi parmi Ni, Co, NiCo ou CoNi, un oxyde de zirconium, un composé Ni-graphite, la couche de surface comprenant au moins l'un des matériaux suivants : alumine, zircone, zircone yttriée, mullite ou yttrine, la céramique pénétrant dans le matériau abradable sur une profondeur comprise entre 50 et 1000 µm, la surface libre lisse de la couche en matériau abradable ayant une rugosité Ra inférieure à 6 µm plus particulièrement inférieure au micron.

3. Procédé de fabrication d'une turbomachine selon la revendication 1, **caractérisé en ce qu'**il comprend, après une étape de réalisation de la couche abradable sur un substrat :
- une étape d'application d'une poudre en matériau céramique sur ladite couche, de manière à combler les aspérités en surface, ladite couche de surface comprenant au moins l'un des matériaux suivants : alumine, zircone, zircone yttriée, mullite ou yttrine, puis ;
- une étape de traitement thermique du revêtement de manière à lier la poudre.

4. Procédé selon la revendication 3, **caractérisé en ce que** la granulométrie de la poudre céramique est comprise entre 0,1 et 15 µm et est inférieure à la taille des pores du matériau abradable.

5. Procédé selon la revendication 3 ou 4, **caractérisé en ce que** ladite poudre est appliquée sous forme d'une barbotine comprenant la poudre en suspension dans l'eau, avec éventuellement un agent dispersant et un liant.

6. Procédé selon l'une des revendications 3 à 5, **caractérisé en ce que** le frittage est réalisé à une température inférieure à 1200°C.

7. Procédé selon l'une des revendications 3 à 5, **caractérisé en ce que** le frittage est réalisé par application d'un faisceau laser ou autre moyen permettant un chauffage local.

## Patentansprüche

1. Turbomaschine, die mindestens ein Statorteil umfasst, in dessen Inneren oder dem gegenüber ein drehendes Teil läuft, wobei das mindestens eine Statorteil eine Innenseite umfasst, die mit einer abreibbaren Beschichtung ausgestattet ist, welche ein Dichtungselement zwischen dem Statorteil und dem drehenden Teil bildet, wobei die abreibbare Beschichtung eine Schicht aus abreibbaren Material umfasst, deren Oberflächenunebenheiten mit thermisch gebundenen Keramikkörnchen gefüllt sind, die Schicht aus abreibbarem Material porös ist und eine Legierung der Zusammensetzung MCrAlY umfasst, wobei M ausgewählt ist aus Ni, Co, NiCo oder CoNi, einem Zirkoniumoxid, einer Ni-Graphit-Verbindung, wobei die Oberflächenschicht mindestens eines der folgenden Materialien umfasst: Aluminiumoxid, Zirkoniumdioxid, yttriiertes Zirkoniumdioxid, Mullit oder Yttriumoxid, wobei die Keramik auf einer Tiefe im Bereich zwischen 50 und 1.000 µm in das abreibbare Material eindringt, wobei die freie glatte Oberfläche der Schicht aus abreibbarem Material eine Rauheit Ra von weniger als 6 µm, insbesondere weniger als einem Mikrometer, aufweist.

2. Verwendung einer Beschichtung als abreibbare Beschichtung für ein Turbomaschinenteil, welche eine Schicht aus abreibbarem Material umfasst, deren Oberflächenunebenheiten mit thermisch gebundenen Keramikkörnchen gefüllt sind, wobei die Schicht aus abreibbarem Material porös ist und eine Legierung der Zusammensetzung MCrAlY umfasst, wobei M ausgewählt ist aus Ni, Co, NiCo oder CoNi, einem Zirkoniumoxid, einer Ni-Graphit-Verbindung, wobei die Oberflächenschicht mindestens eines der folgenden Materialien umfasst: Aluminiumoxid, Zirkoniumdioxid, yttriiertes Zirkoniumdioxid, Mullit oder Yttriumoxid, wobei die Keramik auf einer Tiefe im Bereich zwischen 50 und 1.000 µm in das abreibbare Material eindringt, wobei die freie glatte Oberfläche der Schicht aus abreibbarem Material eine Rauheit Ra von weniger als 6 µm, insbesondere weniger als einem Mikrometer, aufweist.

3. Verfahren zur Fabrikation einer Turbomaschine nach Anspruch 1, **dadurch gekennzeichnet, dass** es nach einem Schritt des Herstellens der abreibbaren Schicht auf einem Substrat Folgendes umfasst:
- einen Schritt des Aufbringens eines Pulvers aus Keramikmaterial auf die Schicht, um die Oberflächenunebenheiten zu füllen, wobei die Oberflächenschicht mindestens eines der folgenden Materialien umfasst: Aluminiumoxid, Zirkoniumdioxid, yttriiertes Zirkoniumdioxid, Mullit oder Yttriumoxid; und anschließend
- einen Schritt der thermischen Behandlung der Beschichtung, um das Pulver zu binden.

4. Verfahren nach Anspruch 3, **dadurch gekennzeichnet, dass** die Korngröße des Keramikpulvers im Bereich zwischen 0,1 und 15 µm liegt und kleiner ist als die Größe der Poren des abreibbaren Materials.

5. Verfahren nach Anspruch 3 oder 4, **dadurch gekennzeichnet, dass** das Pulver in Form einer Aufschlämmung aufgebracht wird, die das Pulver in Suspension in Wasser, mit gegebenenfalls einem Dispergiermittel und einem Bindemittel, umfasst.

6. Verfahren nach einem der Ansprüche 3 bis 5, **dadurch gekennzeichnet, dass** das Sintern bei einer Temperatur von weniger als 1.200 °C ausgeführt wird.

7. Verfahren nach einem der Ansprüche 3 bis 5, **dadurch gekennzeichnet, dass** das Sintern durch Anwendung eines Laserstrahls oder sonstigen Mittels, das ein lokales Erwärmen ermöglicht, ausgeführt wird.

## Claims

1. Turbine engine, comprising at least a stator part, inside or opposite which a rotating part moves, said at least a stator part comprising an internal face having an abradable coating forming a seal element between the stator part and the rotating part, the abradable coating comprising a layer of abradable material whose the surface irregularities are filled in by thermally bound ceramic grains, the layer of abradable material being porous and comprising an alloy of composition MCrAlY with M selected from Ni, Co, NiCo or CoNi, a zirconium oxide or an Ni-graphite compound, the surface layer comprising at least one of the following materials: alumina, zirconia, yttriated zirconia, mullite or yttria, the ceramic penetrating the abradable material over a depth of between 50 and 1000 µm, the smooth free surface of the layer of abradable material having a roughness Ra of less than 6 µm, and more particularly less than one micron.

2. Use, as an abradable coating for a turbine engine part, of a coating comprising a layer of abradable material whose the surface irregularities are filled in by thermally bound ceramic grains, the layer of abradable material being porous and comprising an alloy of composition MCrAlY with M selected from Ni, Co, NiCo or CoNi, a zirconium oxide or an Ni-graphite compound, the surface layer comprising at least one of the following materials: alumina, zirconia, yttriated zirconia, mullite or yttria, the ceramic penetrating the abradable material over a depth of between 50 and 1000 µm, the smooth free surface of the layer of abradable material having a roughness Ra of less than 6 µm, and more particularly less than one micron.

3. Process for manufacturing a turbine engine according to claim 1, **characterized in that** it comprises, after a step of producing of the abradable layer on a substrate:
- a step of applying a powder of ceramic material on said layer, so as to fill the surface irregularities, said surface layer comprising at least one of the following materials: alumina, zirconia, yttriated zirconia, mullite or yttria, then;
- a step of heat-treating of the coating so as to bind the powder.

4. Process according the claim 3, **characterized in that** the granulometry of the ceramic powder is between 0,1 and 15 µm and is less than the size of the pores of the abradable material.

5. Process according to the claim 3 or 4, **characterized in that** said powder is applied in the form of a slip comprising the powder in suspension in water, optionally together with a dispersant and a binder.

6. Process according to one of claims 3 to 5, **characterized in that** the sintering is carried out at a temperature of less than 1200 °C.

7. Process according to one of claims 3 to 5, **characterized in that** the sintering is carried out by applying a laser beam or other means affording local heating.
